Europäisches Patentamt

European Patent Office    (11) Publication number: **0 293 801**

Office européen des brevets    **A2**

(12) EUROPEAN PATENT APPLICATION

(21) Application number: 88108615.1    (51) Int. Cl.⁴: **B32B 29/02**

(22) Date of filing: 30.05.88

(30) Priority: 03.06.87 IT 1249687

(43) Date of publication of application:
07.12.88 Bulletin 88/49

(84) Designated Contracting States:
AT BE CH DE ES FR GB GR IT LI LU NL SE

(71) Applicant: UNIKAY DISPOSABLES S.R.L.
Piazza Brignole 3
I-16122 Genova(IT)

(72) Inventor: Fonzi, Giorgio
6, Via Isonzo
I-21040 Gerenzano (VA)(IT)

(74) Representative: Porsia, Attilio et al
c/o Succ. Ing. Fischetti & Weber-Dr. Porsia
Via Caffaro 3/2
I-16124 Genova(IT)

(54) Composite sheet product.

(57) A composite sheet product obtained by joining a sheet of nonwoven fabric to one or two sheets of dry-formed paper. The continuous sheets used as raw material are fed into a roller hot-press, a powdered or fibrous thermoplastic material having been previously placed between the surfaces to be joined. Said thermoplastic material can advantageously be contained, in part at least, in the composition of the sheets themselves. The composite sheet product thus obtained combines strength, softness, liquid and transpiration absorption characteristics which make it particularly suited for manufacturing sheet products such as bed linen, clothes, or the like.

EP 0 293 801 A2

## "Composite sheet product"

This invention is referred to a composite sheet product obtained by joining a sheet of the material known as "nonwoven fabric" (NWF), generally composed of sheets of polyethylene (PE), polypropylene (PP), polyester (PET), etc, chemically joined by means of binders such as polyvinyl chloride (PVC) or the like, to one or two sheets of the material known as "dry-formed paper" (DP), composed of chemically bound cellulose fibers.

The features of these materials are well known to experts in the field. It can be briefly recalled however that nonwoven fabrics are characterized by high mechanical tear and abrasion strength as well as by water proof resistance which are not matched however by equally high dampness absorption or transpiration capacity. On the contrary, dry-formed paper is very soft, has good liquid absorption capacity also for oily liquids, but is not characterized by sufficient mechanical strength and waterproofing capacity.

Several attempts have been made in the past at manufacturing products such as hospital bed linen, white coats or other wear and consuption goods for temporary use by replacing traditional woven materials with nonwoven fabrics.

These products however showed all the drawbacks typical of nonwoven fabric, i.e. some stiffness, low or totally absent transpiration and liquid absorption characteristics, etc. which made them unsuitable for usages requiring direct contact with the user, as in the case of sheets or clothes.

The major object of the invention is the production of a composite material sheet, composed of a sheet of nonwoven fabric joined with one or two sheets of dry-formed paper, having none of the disadvantages of nonwoven fabrics and dry-formed paper, and providing a new industrial product for applications which have proved impossible so far both with nonwoven fabrics and with dry-formed paper. However, the union of a sheet mainly made of plastic fibers, such as nonwoven fabric sheets usually are, and of a sheet mainly made of cellulose fibers, such as dry-formed paper sheets, may cause serious problems since either an easily flaking product is obtained, or glueing means have to be adopted which destroy the very softness, permeability and absorption features of dry-formed paper, highly desirable for the above mentioned applications.

According to this invention it was surprisingly discovered that firm binding of the two products can be obtained without prejudice to their special characteristics by using a thermoplastic material as the binding means, either powdered or in the shape of a thin film of thermoplastic fibers, or by using as the binding means the thermoplastic fibers contained in some types of nonwoven fabric and by adding thermoplastic fibers to the composition of dry-formed paper during manufacturing, and by causing thermofusion of said thermoplastic fibers while joining said two sheets in a roller hot-press, smooth or embossed.

The thermoplastic powder dispersed between the two sheets, for instance PVC or other thermoplastic resin-based powders, or a thin film of PVC fibers between the two sheets or a nonwoven fabric containing thermoplastic fibers, etc., can be used to join said sheets. Adhesion is further improved if a chlorovynil emulsion (PVC) is used as chemical binder during all or part of the manufacturing process of dry-formed paper.

The invention is further explained in the following examples of application.

### Example 1

A sheet of nonwoven fabric weighing 18 $g/m^2$ and a sheet of dry-formed paper weighing 60 $g/m^2$ are continuously fed into a smooth roller hot-press. The joining surfaces of said sheets are sprinkled with 12 $g/m^2$ of the thermoplastic powder, polyvinyl chloride powder for instance, before being fed through the press rollers. After passing through the hot rollers a composite sheet weighing 90 $g/m^2$ is obtained. Said sheet has optimum mechanical strength and a high liquid absorption and retention capacity. Thanks to its softness and comfort (good heat exchange, absorption and exchange of damp vapor, sweat, etc.) it can be used to manufacture sheets, for example for infectious disease hospital wards, or to manufacture surgeon's white coats, and the like.

### Example 2

The same process as in example 1, by using a press with a raised wrought member (embossed) in order to obtain partial interpenetration (in dots or continuous or broken lines) better than that obtained with the press of the previous example.

### Example 3

A sheet of polyester nonwoven fabric weighing 15 $g/m^2$, a sheet of dry-formed paper weighing 63 $g/m^2$, and an intermediate layer of PVC fibers weighing 8 g/m² are fed into a machine of the same type as described in examples 1 and 2 above. A final composite sheet weighing 80 g/m² is obtained.

Example 4

By carrying out the operations described in examples 1 to 3, a sheet of nonwoven fabric composed of a mixture of polyester fibers and of polyvinyl chloride fibers and weighing 20 g/m² and a sheet of dry-formed paper weighing 60 g/m² are fed in a roller hot press. A final composite sheet weighing 80 g/m² is obtained.

Example 5

According to the same procedure described in the previous examples, a loose lap of mixed fibers weighing 20 g/m² and partly containing polyvinyl fibres and a sheet of dry-formed paper weighing 80 g/m² are fed into a roller hot-press. A composite material weighing 70 g/m² is obtained.

Although in all the previous examples reference was always made to composite sheets made of a nonwoven fabric and a dry-formed paper sheet secured together, a composite sheet of the paper-fabric-paper type can also be manufactured having a sheet of nonwoven fabric between two sheets of dry-formed paper, by proceeding as described in the previous examples and by using any of the assembly techniques described above. An example of such a composite sheet is given below.

Example 6

In order to manufacture a composite sheet comprising two outer sheets of dry-formed paper and a middle sheet of nonwoven fabric, two continuous sheets of dry-formed paper are used, each weighing 50 g/m², which were manufactured by using a chlorovynil emulsion as the binding agent of the cellulose fibers, and a middle sheet of nonwoven fabric containing polyethylene fibers and polyvinyl chloride fibers, weighing 20 g/m². Said three sheets are fed through the smooth or embossed rollers of a hot press. A composite sheet weighing 120 g/m² is obtained.

The pressure of the press rollers used to manufacture composite sheets according to this invention of course can vary within a very wide range depending on the desired characteristics of the finished products. However pressure values non exceeding the 15-100 kg/cm² are recommended.

The above description clearly shows the advantages of the new product obtained according to the invention, which belongs to the class of semi-durable nonwoven fabrics but is characterized by greater softness to the touch, high liquid absorption capacity, even oily and organic ones and the like, as well as by great retention of liquids and optimum confort level, which make it particularly appropriate for manufacturing sheets, white coats, and the like.

The composite product obtained according to this invention costs remarkably less than similar composite sheets that can be obtained with known procedures and for instance by glueing, and it has clearly superior characteristics.

**Claims**

1) Composite sheet product characterized in that it comprises a sheet of nonwoven fabric permanently joined by means of thermoplastic binders are to at least one sheet of dry-formed paper.

2) Composite sheet product according to claim 1, characterized in that said thermoplastic binders are in powdered form.

3) Composite sheet product according to claim 1, characterized in that said thermoplastic binders are in the shape of a thin film of thermoplastic material fibers.

4) Composite sheet product according to claim 1, characterized in that said thermoplastic binders are contained as thermoplastic material fibers in the sheet of nonwoven fabric.

5) Composite sheet product according to claim 1, characterized in that said sheet of nonwoven fabric is made of a loose lap of fibers containing thermoplastic material fibers.

6) Composite sheet product according to the previous claims, characterized in that said dry-formed paper contains some thermoplastic material.

7) Composite sheet product according to claim 6, characterized in that said thermoplastic material is polyvinyl chloride.

8) Composite sheet product according to claims 1 through 5 characterized in that said powder and/or said thermoplastic fibers are polyvinyl chloride powder or fibers.

9) A process for the manufacture of a composite composite sheet product according to the previous claims, characterized by the steps of adding thermoplastic binding agents to the said sheets or webs of nonwoven fabric and dry-formed paper and of joining together said sheets or webs by means of a smooth or embossed roller hot-press.

10) A process according to claim 9, where said press smooth or embossed rollers exert a pressure ranging from 15 to 100 kg/cm².

11) Use of the composite sheet product according to the previous claims to manufacture sheets, clothes, or similar composite sheet products.